# EUROPEAN PATENT APPLICATION

(11) **EP 1 557 745 A1**
(43) Date of publication of application: **27.07.2005**
(21) Application number: 04001255.1
(22) Date of filing: 21.01.2004
(51) Int. Cl.: G06F 3/02, G06F 1/16

(54) **Foldable keyboard transmitting through infrared rays**

(71) Applicant: Chain Tay Technology Co., Ltd., Taipei (TW)
(72) Inventor: Chang, Cheng-Chung, Taipei (TW)
(74) Representative: Viering, Jentschura & Partner

(57) **Abstract**

A foldable keyboard transmitting through the infrared rays has a plurality of infrared transmitter to transmit the data inputted by the keyboard to one or more than one hosts at the same time through an infrared transmission interface; said host is a Personal Digital Assistant (PDA) or a mobile phone and so on, a mobile data product with an internal infrared transmission interface; said keyboard could be folded as a notebook size to be hold in one hand, easily carried out and put inside the pocket of a man's suit; also with a magnet connection design to bear normal pounds and assembled with power itself to avoid consuming the host tarriance ability, in particular, with multiple data transmission mode to be operated under many situations.

## Description

### BACKGROUND OF THE INVENTION

### 1.Field of the invention

This invention relates to a foldable keyboard transmitting the data through the infrared rays; in particular, to a foldable keyboard with more than one infrared transmitters transmitting the data keyed in by the keyboard to the different mobile data hosts at the same time through an infrared transmission interface, and with power source itself, capable of been operated under the different circumstances.

### 2.Description of the prior art

Due to the substantial increases of the global populations using the mobile data, the mobile phones personal digital assistant(PDA) and notebooks become the best equipments. Carrying a notebook with weight up to 2 kilogram for a long time insidiously increases many burdens to a Mobile User. However, the user is used to key in the longer data by a computer keyboard.

The prior input method of the PDA type is to imitate the writing operation mode of a book and pen, to use a pen for input and recognize the handwriting words by the system, or to use the simple keys marked with up ` down ` right ` left, or to adopt the way touching the monitor to achieve the user's need. The prior input way of the mobile phone type uses the simpler way pressing the keys by hand to achieve the instruction input. It is not only lack of efficiency, but also makes the beginner need more time to accommodate.

Besides, although the technology development makes the demarcation between the PDA and mobile phone more and more blurred, and in recent years the portable keyboard has been developed in accordance with the PDA; however, it could not give considerations of the mobile phone, which is popularly used, at the same time. Furthermore, a desktop keyboard, which is the most popularly used by the maximum users, obviously could not conform to the portable requirement of the mobile data, which requires light ` thin ` short and small.

The inventor has noticed the various disadvantages associated with the prior input method on actual practice and accumulated his experiences engaged in developing practices about relative areas for many years, and meticulously studied for the requirement of the mobile data, has developed the foldable keyboard transmitting through the infrared rays of the invention.

### SUMMARY OF THE INVENTION

It is an object of the present invention to provide a foldable keyboard transmitting through the infrared rays proceeds to transmit the wireless data for more than one mobile data products at the same time, even under different circumstances, to promote the benefits for users.

It is another object of the invention to provide a foldable keyboard transmitting through the infrared rays, which could take normal pound, easily be folded, convenient be carried without occupying much space.

The foldable keyboard transmitting through the infrared rays, which could achieve the above objects, combines- with the internal infrared transmission interface equipped in most PDA ` mobile phones and notebooks and comforts to the standard infrared transmission treaty. An infrared transmission port of a mobile host is used to wirelessly transmit the data keyed in by a keyboard through the infrared rays between the foldable keyboard transmitting through the infrared rays and the mobile data host. Due to the direction limitation of the infrared transmission, to respectively install an infrared transmitter on a keyboard base of the foldable keyboard transmitting through the infrared rays and an extension frame to transmit the data, even when the mobile data host is set in different position. The extension frame connected on a rotation base could adjust the location of the infrared transmitter in accordance with the different design of the infrared transmission port of the mobile data host.

The keyboard of the foldable keyboard transmitting through the infrared rays, which could be separated to two parts, folds inwardly to increase the whole length and to be conveniently carried out. The whole related device of the support frame could become a fastener of the whole device after folding several times and tightly fastens on the outer surface of the foldable keyboard base with a small magnet thereon to make the foldable keyboard transmitting through the infrared rays easily be collected and carried out. The whole foldable keyboard transmitting through the infrared rays reduces the whole space through the magnetic attraction of the magnet unit and the foldable characteristic of the components, and the adsorptive magnet unit accordingly spreads to disperse the stresses of the components upon receiving the normal and reasonable pound, such as falling on the ground from a table. The foldable keyboard transmitting through the infrared rays assembles with a power base in the internal transmitting network, which could load the battery to supply the power without connecting the power form the mobile data host to avoid consuming the host tarriance ability.

### BRIEF DESCRIPTION OF THE DRAWINGS

The drawings disclose an illustrative embodiment of the present invention, which serves to exemplify the various advantages and objects hereof, and are as follows:
Fig. 1 is a schematic signal flow chart of the present invention;
Fig 2 is a schematic appearance view showing the unfolded structure of the present invention;
Fig. 3 is a schematic view of the embodiment of the present invention;
Fig. 4 is a schematic view of another embodiment of the present invention; and
Fig. 5 is a schematic view of the folded appearance of the present invention.

### [Representative Symbols of main components]

- 100: foldable keyboard transmitting through the infrared rays
- 110: signal inputted by a mechanical keys of a keyboard
- 120: microprocessor
- 130: infrared transmission interface
- 200: superior infrared transmitter
- 300: primary infrared transmitter
- a 01: infrared transmission interface
- a 02: driving program
- a 03: operation procedure module
- a 04: transmission/storage module
- b 01: infrared transmission interface
- b 02: driving program
- b 03: operation procedure module
- b 04: transmission/storage module
- 1: foldable keyboard base
- 2: superior infrared transmitter
- 3: primary infrared transmitter
- 4: extension frame
- 5: rotation base
- 6: support frame
- 7: A-type frame
- 8: back frame
- 9: skidproof cushion
- 10: hole for inserting pens
- 11: battery base
- 12: switch
- 13: Magnet unit
- 14: protrusion
- a: Personal Digital Assistant
- b: mobile phone
- c: notebook

### DETAILED DESCRIPTION OF PREFERRED EMBODIMENT

For the Examiner further and accurate understanding the structure, use and characteristic of the invention, the inventor cites some preferred embodiments cooperated with the drawings and particularly illustrates ad follows:

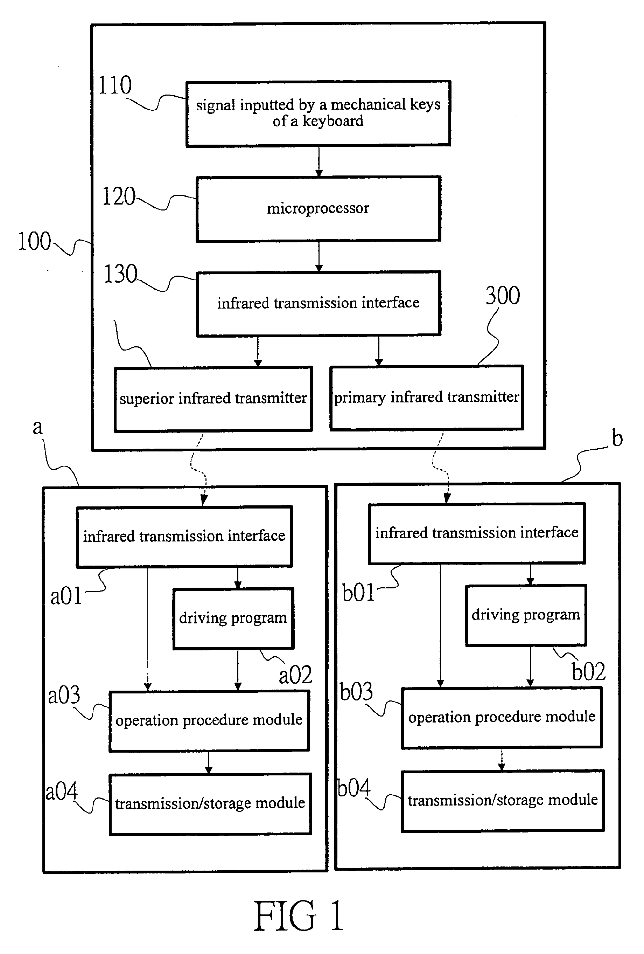

Referring to Fig.1, which is a schematic signal flow chart of the present invention; the mechanical keys would be touched off and the signal inputted by said mechanical keys of a keyboard 110 would produce a reaction signal thereblow transmitted to a microprocessor 120 through the internal circuits, when the user knocks the keys of the foldable keyboard transmitting through the infrared rays 100. The signals received and processed by the microprocessor 120 would be transferred to digital signals and be transmitted to an infrared transmission interface 130, and be shoot out by a superior infrared transmitter 200 and a primary infrared transmitter 300 of said foldable keyboard transmitting through the infrared rays 100. The different mobile data hosts, such as a Personal Digital Assistant a and a mobile phone b, could respectively receive the signals through the infrared transmission interfaces a01 and b01 at the same time; and the mobile data hosts (a, b) at least respectively comprise an infrared transmission interface (a01,b01) ` a driving program(a02,b02) ` an operation procedure module(a03,b03) and a transmission/storage module(a04,b04). The signal data transmitted to said mobile data host could be accepted and processed by said driving program (a02, b02) or said operation procedure module (a03,b03). The user could transmit said data to other place or storage inside said mobile data host (a, b) through said transmission/storage module (a04, b04) as required.

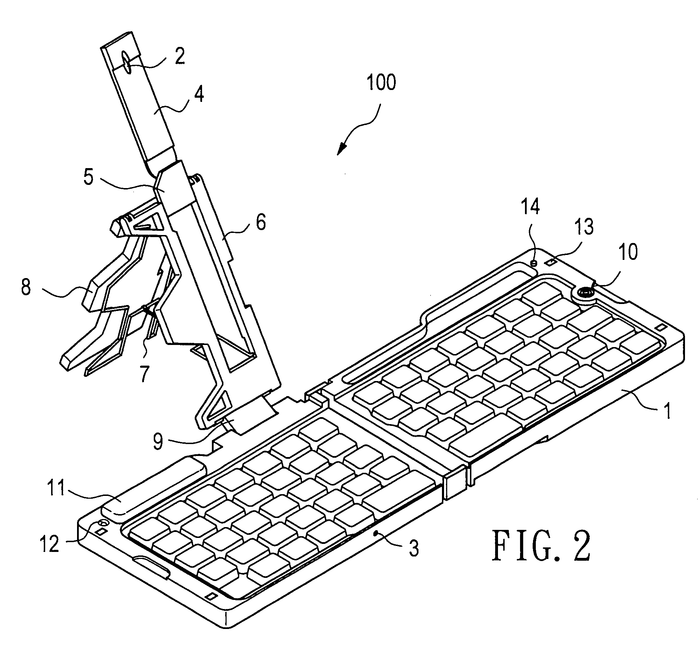

Referring to Fig.2, which is a schematic appearance view showing the unfolded structure of the present invention; the foldable keyboard base 1 could be separated to two parts and folded to the center. A hole for inserting pens 10 is set on the right side of the foldable keyboard base 1 of Fig.2, when the pens, such as PDA pens, not on use could insert into said hole and would be easily taken out; a battery base 11 is set on the left side of the keyboard to put A4 battery therein to supply power to the internal circuit of the keys of the foldable keyboard transmitting through the infrared rays 100; a primary infrared transmitter 3 as LED shape is installed on the left bottom of the foldable keyboard base 1 with light on normal operation; and a superior infrared transmitter 2 is set on a extension frame 4 of a rotation base 5; said extension frame 4 could be adjusted at any angle relative to the position of said rotation base 5. A skidproof cushion 9 connected to the bottom of said rotation base 5 could be put the articles thereon and its surface is full of pellets to prevent said articles slipping; the articles put on said skidproof 9 could lean on a support frame 6, and said support frame 6 connected with an A-type frame 7 firmly supports the relative device including a back frame 8 and so on. A protrusion 14 of the right half portion of the keyboard could be inserted in a switch 12 relative to the position of said right half portion of the keyboard, when the foldable keyboard base 1 is folded into the center; said switch 12 would be touched off to cause an broken circuit of the foldable keyboard transmitting through the infrared rays 100 to save the power.

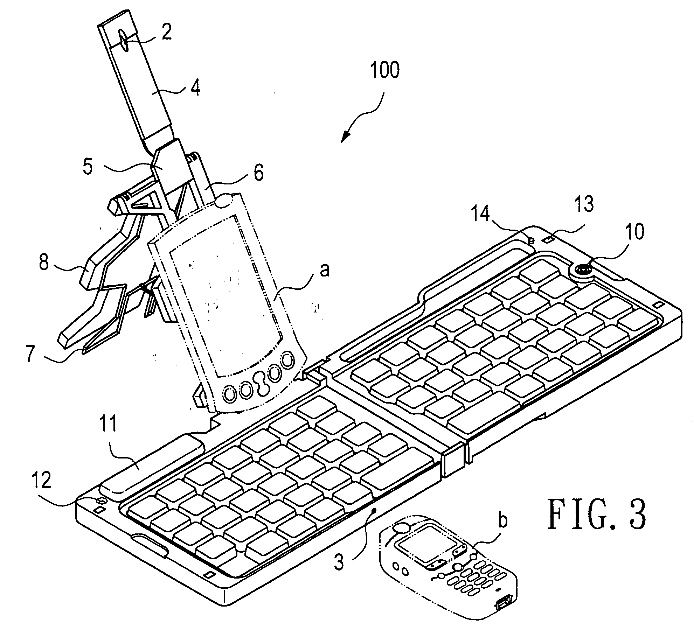

The foldable keyboard transmitting through the infrared rays 100 has two infrared transmitters to transmit the data, even when the mobile data host is set in different position. The mobile data host could be set on said skidproof 9 and receives the data wirelessly transmitted form the superior infrared transmitter 2, one of said two infrared transmitters, on said extension frame 4 of said foldable keyboard transmitting through the infrared rays 100 through the receiving end of the infrared transmission port. Due to the direction limitation of the infrared transmission, the transmitting end of said superior infrared transmitter 2 and the receiving end of the infrared transmission port need to mutually collate, then to transmit the data. The infrared transmission ports of the different mobile data hosts are with many differences, some are installed on the right top of the mobile data hosts, and some are installed on the right side, the left side design are also very common. The extension frame 4 of the foldable keyboard transmitting through the infrared rays 100 connected onto the rotation base 5 could be adjusted at 360°, in another word, the superior infrared transmitter 2 installed on said extension frame 4 of the foldable keyboard transmitting through the infrared rays 100 has an collation angle of 360° in accordance with the direction of the infrared transmission port of the mobile data host on the skidproof 9, the primary infrared transmitter 3 on the bottom of the keyboard base of the foldable keyboard transmitting through the infrared rays 100 also could transmit the data in different situations; thus to match up the mobile data host with any type of the transmission port. Referring to Fig.3, through the present invention, the inputted data is transmitted to a Personal Digital Assistant a through the superior infrared transmitter 2 and to a mobile phone b through the primary infrared transmitter 3 at the same time.

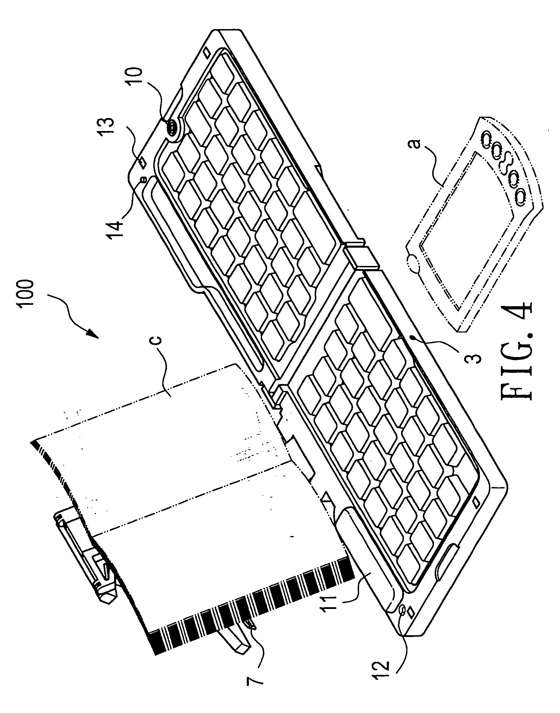

The rotation base 5 and the extension frame 4 of the foldable keyboard transmitting through the infrared rays 100 could insert in the support frame 6 after rotation, then the back frame 8 could overturn in front of said support frame 6; thus the whole relative device of the support frame could be used as a bookshelf. Referring to Fig.4, which is another embodiment of the present invention, a notebook c is put on a skidproof cushion 9 and the inputted data is transmitted to a Personal Digital Assistant a through the primary infrared transmitter 3.

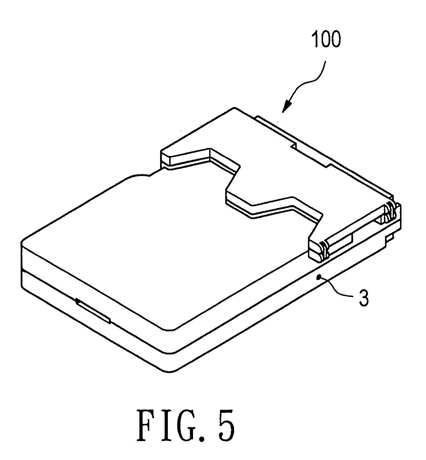

The foldable keyboard base 1 of the foldable keyboard transmitting through the infrared rays 100 could separate the keyboard to two parts to fold to the center, and compact by the mutual attraction of the magnet unit 13, the A-type frame 7 could fold into the back of the support frame 6, then the adjustable extension frame 4 turns to insert with the support frame 6, the back frame 8 also could turnover and lean by the support frame 6; thus to form the fastener of the whole device and to use the small magnet of the foldable keyboard base 1 tightly fastens on the outer surface of said foldable keyboard base 1 to make the foldable keyboard transmitting through the infrared rays 100 easily be carried out and collected. Referring to Fig.5, which is a schematic view of the folded appearance of the present invention.

Many changes and modifications in the above described embodiment of the invention can, of course, be carried out without departing from the scope thereof. Accordingly, to promote the progress in science and useful arts, the invention is disclosed and is intended to be limited only by the scope of the appended claims.

## Claims

1. A foldable keyboard transmitting through the infrared rays 100 comprising more than one infrared transmitters to transmit the inputted data to at least one unit of a mobile data host through an infrared transmission interface130;

2. A foldable keyboard transmitting through the infrared rays 100 of claim 1, wherein said mobile data host is a mobile phone b;

3. A foldable keyboard transmitting through the infrared rays 100 of claim 1, wherein said mobile data host is a Personal Digital Assistant a;

4. A foldable keyboard transmitting through the infrared rays 100 of claim 1, wherein the foldable keyboard comprises:
a foldable keyboard base 1, which separates the keyboard to two parts and folds inwardly, with an infrared transmitter on the bottom thereof;
a support frame 6 connecting with a back frame 8 by a shaft to form an A-type frame 7;
a rotation base 5 on said support frame 6 connecting with an extension frame 4 installed with another infrared transmitter;
a battery base 11 supplying power to the internal circuit;
and a magnet unit 13 to make the components tightly fasten by the magnetic attraction.
